# EUROPÄISCHE PATENTSCHRIFT

(11) **EP 2 697 132 B1**
(45) Veröffentlichungstag und Bekanntmachung des Hinweises auf die Patenterteilung: **24.08.2016**
(21) Anmeldenummer: 12715911.9
(22) Anmeldetag: 12.04.2012
(51) Int. Cl.: B65D 85/32, B29C 69/02, B65D 43/00, B65D 50/06, B65D 25/10

(54) **VERPACKUNGSBEHÄLTER**
PACKAGING CONTAINER
RÉCIPIENT DE CONDITIONNEMENT

(30) Priorität: 12.04.2011 CH 644112011
(43) Veröffentlichungstag der Anmeldung: 19.02.2014
(73) Patentinhaber: udo.bodmer for solutionB, 77756 Hausach (DE)
(72) Erfinder: BODMER, Udo, 77756 Hausach (DE); KRUMMENACHER, Josef, CH-5630 Muri (CH)
(74) Vertreter: Hepp Wenger Ryffel AG
(86) Internationale Anmeldenummer: PCT/EP2012/056653
(87) Internationale Veröffentlichungsnummer: WO 2012/140124

(56) Entgegenhaltungen:
- EP-A1- 1 541 067
- EP-A1- 2 301 359
- WO-A1-03/094316
- WO-A1-2006/014882
- DE-C- 140 306
- DE-C- 273 702
- DE-C- 353 476
- DE-U1- 9 104 509
- DE-U1-202010 001 288
- FR-A- 1 127 076
- NL-A- 6 402 935
- US-A- 292 303
- US-A1- 2005 255 197
- US-A1- 2006 060 493
- US-A1- 2007 256 954
- US-A1- 2008 173 609
- US-B1- 6 173 834

## Beschreibung

Die Erfindung betrifft einen Eierverpackungsbehälter gemäss dem Oberbegriff des unabhängigen Anspruchs 1.

### Beschreibung

Verschliessbare Verpackungsbehälter werden zur Verpackung von Waren aller Art verwendet. Bei bestimmten Waren, etwa Lebensmitteln, Pharmaprodukten oder dergleichen, weist der Verpackungsbehälter einen Schliessmechanismus auf, welcher dazu dient, nach erstmaligem Öffnen des Behälters und Entnehmen eines Teils der Ware, diesen mindestens vorübergehend wieder zu verschliessen. Derartige Verschlussmechanismen sind etwa bekannt bei Getränkeflaschen, bei Tuben oder bei Eierkartons.

In gewissen Fällen ist es notwendig, dass mittels eines Siegels sichergestellt werden kann, dass der Schliessmechanismus nicht geöffnet worden ist. Dies wird im Stand der Technik etwa dadurch erzielt, indem über einen wiederverschliessbaren Verpackungsbehälter ein zerreissbares Klebeband angebracht, eine Folie überspannt oder ein abreissbarer Siegelstreifen angeformt wird. Derartig versiegelte Schliessmechanismen oder Verschlüsse sind auch als "one time open seal" oder "tamper-resistant seal" bekannt.

Einer der Nachteile dieser Lösungen besteht darin, dass derartige Siegel vor dem erstmaligen Öffnen zerstört oder entfernt werden müssen, also etwa durch Entfernung von Material. Dabei ist weiter nachteilig, dass die meisten entfernten Siegel als Abfall entsorgt werden müssen. Zudem sind sie verfahrenstechnisch bei der Herstellung der Verpackung oft nur unter besonderem Aufwand anbringbar oder anformbar.

Mit der gattungsbildenden DE 20 2010 001 288 U1 und der EP 2 301 359 A1 wurden jeweils Eierverpackungsbehälter bekannt, welche im Bereich der Aufnahmen für die Eier seitliche Federelemente aufweisen, welche die Eier zentrieren und mittels Reibschluss halten. Grosse Stossbelastungen führen jedoch dazu, dass die Eier bis auf den Boden des Behälters durchschlagen können.

Die Aufgabe der vorliegenden Erfindung besteht daher darin, einen Eierverpackungsbehälter vorzuschlagen, welcher die Nachteile des Stands der Technik nicht aufweist.

Insbesondere wird die Aufgabe gelöst durch einen Eierverpackungshehälter gemäss dem unabhängigen Anspruch 1.

Gemäss einem weiteren Aspekt wird vorgeschlagen, dass ein erster Behälterteil direkt oder indirekt in einer Anformstelle an einen zweiten Behälterteil angeformt ist, insbesondere im Spritzgussverfahren. Dazu kann eine Spritzgussform so ausgestaltet sein, dass das Material aus zwei Teilen der Kavität der Spritzgussform in einem Trennbereich aneinander fliesst und sich dort verbindet. Ein solcher Behälter weist verschiedene Vorteile auf: Die Anformstelle kann gezielt einen Scharnierbereich zum gelenkigen Verbinden der beiden Behälterteile bilden. Dadurch können die Behälterteile in einer Schwenkbewegung von einer geöffneten Position zur Aufnahme oder zur Entnahme von Verpackungsgut in eine geschlossene Position bewegt werden. Es ist ausserdem denkbar, den ersten Behälterteil und den zweiten Behälterteil aus Material mit unterschiedlichen Eigenschaften zu formen. Typischerweise kann Material mit unterschiedlichen optischen Eigenschaften wie beispielsweise unterschiedlicher Transparenz, Opazität oder Farbe verwendet werden. Es können die beiden Behälterteile aus gleichem Kunststoffmaterial gebildet sein oder auch aus unterschiedlichen Kunststoffmaterialien. Besonders bevorzugt wird ein unterer Behälterteil zur Aufnahme des Verpackungsgutes eingefärbt, sodass er eine geringere Transparenz aufweist und ein oberer oder zu öffnender Behälterteil wird im Wesentlichen transparent und farblos ausgebildet. Dies ermöglicht es dem Betrachter, das Verpackungsgut in der noch verschlossenen Verpackung zu betrachten. Auch ist es denkbar, je nach Anwendungsgebiet den oberen und unteren Behälterteil mit unterschiedlicher Festigkeit herzustellen. Während derartige Behälter besonders bevorzugt in Kombination mit dem vorstehend beschriebenen Schliessmechanismus verwendet werden, versteht es sich von selbst, dass solche Behälter auch ohne solche Schliessmechanismen vorteilhaft sein können.

Gemäss einem weiteren Aspekt können zwei Behälterteile des Eirverpackungsbehälters in einem Scharnierbereich mit einem Verbindungsstreifen gelenkig miteinander verbunden sein. Der Verbindungsstreifen kann als separate Folie ausgebildet sein und sich bevorzugt derart über den Scharnierbereich hinaus erstrecken, dass ein Teil des Verbindungsstreifens bedruckbar ist oder dass der Verbindungsstreifen teilweise bedruckt ist. Mit dieser Ausführungsform kann ein zusätzlicher Verbindungsstreifen gleichzeitig als Scharnier und als bedruckbares Label verwendet werden. Besonders bevorzugt werden die Behälterteile an den Verbindungsstreifen beim Herstellverfahren angeformt, insbesondere durch Spritzgiessen.

Noch ein weiterer Aspekt der Erfindung kann einen Eierverpackungsbehälter betreffen, welcher erste Bereiche umfasst, die in einem Spritzgussverfahren hergestellt sind und zweite Bereiche, welche nach dem Spritzgiessverfahren durch Tiefziehen oder Blasformen geformt sind. Dabei definieren die ersten Bereiche Mittel zum Verschliessen oder Verbinden von Behälterteilen und die zweiten Bereiche definieren einen Aufnahmebereich zur Aufnahme von Eiern. Bereiche, für welche eine hohe Präzision erforderlich ist, dass heisst insbesondere Bereiche mit ineinander eingreifenden Elementen, werden so präzis durch Spritzgiessen geformt. Bereiche, bei welchen eine weniger grosse Präzision erforderlich ist, wie beispielsweise die Aufnahmebereiche für das Verpackungsgut, können durch Tiefziehen gebildet werden. Dadurch kann die Grösse der Spritzgussform reduziert und die Behälter kostengünstiger produziert werden.

Ein erfindungsgemässer Eierverpackungsbehälter weist in einem oder in beiden Behälterteilen in Bereichen, die zur Aufnahme von Verpackungsgut dienen, Federelemente auf. Federelemente in dem als Boden dienenden Behälterteil dienen erfindungsgemäß zur Dämpfung des Aufpralls der zu verpackenden Einer, wenn diese aus einer gewissen Höhe beim Befüllvorgang in die Verpackung eingelegt werden. Dies ist insbesondere bei zerbrechlichen Eiern sinnvoll. Federelemente am Deckelteil können dazu dienen, bei Produkten unterschiedlicher Grösse diese unabhängig von ihrer Grösse stabil im Behälter zu halten. Dies ist ebenfalls insbesondere bei Eiern sinnvoll, bei denen naturgemäss unterschiedliche Grössen bestehen.

Die Federelemente sind erfindungsgemäß als in ungefähr senkrechter Richtung vom Deckel bzw. vom Boden vorstehende Laschen ausgebildet, die entlang eines Kreises angeordnet sein können. Typischerweise werden drei bis fünf regelmässig entlang des Umfangs eines Kreises angeordnete Laschen vorgesehen.

Ein weiterer Vorteil der Erfindung besteht darin, dass der Eierverpackungsbehälter einstückig, in verschiedenen Formen herstellbar ist.

Der Eierverpackungsbehälter geniesst erwartungsgemäss eine hohe Akzeptanz beim Endverbraucher, da er auch aus rezyklierbarem Kunststoff herstellbar ist. Zudem können verschiedene Werkstoffeigenschaften kombiniert werden, so dass der Deckel bspw. transparent und der Boden in einer bevorzugten Farbe ausgebildet ist.

Der erfindungsgemässe Eierverpackungsbehälter weist zudem den Vorteil auf, dass er bspw. gegenüber einem aus Holzschliff hergestellten Behälter exakte Abmessungen aufweist und somit auch industriell, bspw. mittels Pick-and-Place Robotern beim Abpackvorgang passgenau verschlossen, ergriffen und schachtelbar ist.

Ein anderer Vorteil der Erfindung besteht darin, dass der offene Eierverpackungsbehälter kompakter stapelbar und somit kosteneffizient transportierbar ist.

Weitere die Erfindung verbessernde Massnahmen sowie ein Verfahren und eine Vorrichtung werden nächstehend gemeinsam mit der Beschreibung eines bevorzugten Ausführungsbeispiels der Erfindung anhand der Figuren und der weiteren Ansprüche näher dargestellt.
Fig. 1 zeigt einen verschliessbaren Eierverpackungsbehälter in einer perspektivischen Ansicht, wobei der Behälter einen als Boden ausgebildeten Behälterteil und zwei als symmetrische Deckelteile ausgebildete Behälterteile aufweist, wobei der eine Deckelteil in geöffnetem und der andere Deckelteil in geschlossenen Zustand dargestellt ist und wobei zwei voneinander unabhängige Schliessmechanismen des Behälters vorhanden sind;
Fig. 2 zeigt als Detail der Fig. 1 in einer perspektivischen abgebrochenen Darstellung einen Schliessmechanismus des Behälters mit einem Deckelteil in einer geschlossenen und verriegelten Position;
Fig. 3 zeigt perspektivisch und abgebrochen dargestellt ein teilweise geschnittenes Deckelteil in einer nicht verschlossenen und nicht verriegelten Zwischenposition;
Fig. 4 zeigt perspektivisch und abgebrochen dargestellt ein teilweise geschnittenes Deckelteil in einer nicht verschlossenen und nicht verriegelten weiteren Zwischenposition;
Fig. 5 zeigt perspektivisch und abgebrochen dargestellt den Schliessmechanismus des Behälters mit einem als Mehrfachgelenk ausgebildeten Entriegelungsteil sowie ein Verriegelungsteil, wobei das Verriegelungsteil in dargestellter Verriegelungsposition am Entriegelungsteil korrespondierend angreift und eingerastet ist;
Fig. 6 zeigt perspektivisch und abgebrochen dargestellt das Entriegelungsteil, welches nach dessen Betätigung durch Krafteinwirkung dauernd in einer dargestellten Entriegelungsposition verbleibt und das Verriegelungsteil freigibt;
Fig. 7 zeigt den Behälter in einem offenen Zustand in einer Aufsicht mit den Schnittlinien III-III und IX-IX;
Fig. 7a wiederum zeigt ein Detail aus Fig. 7;
Fig. 8 zeigt den Behälter in einer Ausführung, bei welcher das als Deckel ausgeführte eine Behälterteil aus einem Teil besteht;
Fig. 9 zeigt eine vereinfachte und abgebrochene Darstellung des Entriegelungsteils entlang der in Fig. 7 angedeuteten Schnittlinie IX-IX;
Fig. 10a, 10b und 10c zeigen in einer schematischen, vereinfachten Detailansicht das Scharnier zwischen den jeweiligen Behälterteilen des Behälters und
Fig. 11a und 11b zeigen eine Vorrichtung zur Herstellung des Behälters.

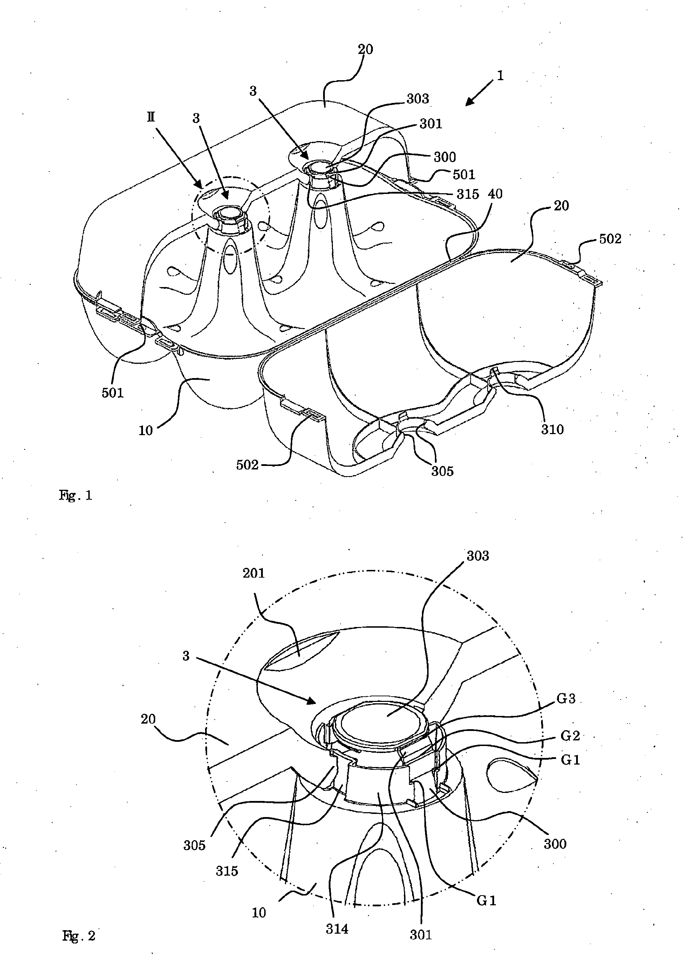

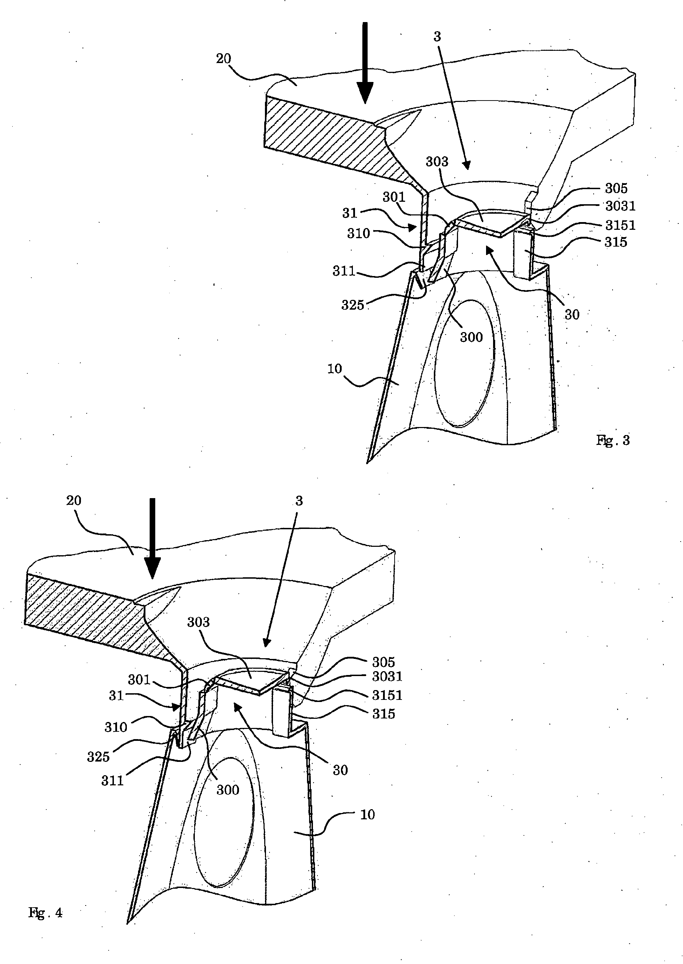

Figur 1 illustriert einen verschliessbaren Eierverpackungsbehälter 1 mit mehreren Behälterteilen 10,20 und mit mindestens einem Schliessmechanismus 3, der nicht Gegenstand der Ansprüche ist, mit jeweils mindestens zwei stabilen Positionen in einer perspektivischen Ansicht. Der oder jeder Schliessmechanismus 3 weist ein als Mehrfachgelenk ausgebildetes Entriegelungsteil 30 (siehe Figuren 3 bis 6) sowie ein Verriegelungsteil 31 (siehe Figuren 3 bis 6) auf. Das Verriegelungsteil 31 greift in einer ersten stabilen Position, einer Verriegelungsposition, am Entriegelungsteil 30 korrespondierend an. Zum Entriegeln des Schliessmechanismus 3 wird das Entriegelungsteil 30 manuell betätigt, so dass das Entriegelungsteil 30 nach dessen Betätigung dauernd in einer zweiten stabilen Position, einer Entriegelungsposition verbleibt. Das Entriegelungsteil 30 ist mindestens abschnittsweise in einer Schwenkbewegung beweglich, wobei besagter Abschnitt nach erfolgter Schwenkbewegung die Freigabe des Verriegelungsteils 31 ermöglicht. Während eine derartige Anordnung mit schwenkbaren Entriegelungsteilen mit Gelenken bevorzugt ist, sind auch andere Schliessmechanismen im Rahmen der Erfindung denkbar, beispielsweise auch Schnappverbindungen mit Soll-Reiss-Bereichen, welche beim erstmaligen Öffnen zerstört werden.

Das mehrgelenkig ausgebildete Entriegelungsteil 30 weist mindestens ein erstes schwenkbar an einem Behälterteil 10 gelagertes Entriegelungselement 300 ("Riegel") zum korrespondierenden Angreifen am Verriegelungsteil 31 sowie ein mit dem ersten verbundenen zweiten Entriegelungselement 303 ("Taste") auf. Das Verriegelungsteil 31 ist mit dem zweiten Behälterteil 20 verbunden.

Das mehrgelenkige Entriegelungsteil 30 umfasst vorzugsweise ein drittes Entriegelungselement 301 ("Steg"), welches mit erstem und zweitem Entriegelungselement 300,303 derart gelenkig verbunden ist, dass beim Betätigen des Entriegelungsteils 30 der schwenkbar gelagerte Riegel 300 mindestens stellenweise eine Schwenkbewegung vollzieht. Dazu ist der Riegel 300 um eine funktionale Achse oder ein funktionales Gelenk schwenkbar.

Die Taste 303 ist beweglich mit dem oder jedem Riegel 300 verbunden. Jeder Riegel 300 ist innerhalb eines Rahmens 314 (siehe Figur 2), welcher an dem Behälterteil 10 angeformt ist, beweglich angeordnet. Der Rahmen 314 oder Kragen ist vorliegend am Ende eines säulenartigen Teils des einen Behälterteils 10 ("Boden") angeordnet. Die Taste ist wenigstens mit einem Riegel verbunden.

Der Behälter 1 ist aus einem Kunststoff im Spritzgiessverfahren hergestellt. Einer der Vorteile der Erfindung besteht auch darin, den Behälter aus einem einzigen Stück zu fertigen, wobei dieses Stück mehrere Behälterteile aufweist. Als Materialien bevorzugt sind Polyethylen (PE) und/oder Polyethylenterephthalat (PET) sowie biologisch abbaubare Kunststoffe, basierend auf natürlich vorkommenden Polymeren, wie etwa Polylactide (PLA). Besonders bevorzugt ist der obere, öffenbare Behälterteil 20 aus einem transparenten Material gefertigt. Der untere Behälterteil 10 kann dabei aus einem Material gefertigt sein, welches eine geringere Transparenz aufweist als der obere Behälterteil 20. Insbesondere kann der obere Behälterteil 20 farblos transparent und der untere Behälterteil 10 in einer Farbe eingefärbt aber immer noch transparent sein.

Das Bezugszeichen 501 bezeichnet ein als Nocken ausgebildetes Stabilisierungselement, welches in ein mit 502 bezeichnetes und als Ausnehmung oder Loch ausgebildetes Stabilisierungselement des Behälters 1 eingreift, wenn die Behälterteile 10, 20 aufeinander anliegen bzw. der Behälter 1 geschlossen ist. Die besagten Elemente stabilisieren und führen die beiden aufeinanderliegenden Behälterteile 10,20. Der Behälter wird dadurch verwindungssteif. Selbstverständlich sind auch andere Stabilisierungselemente denkbar, welche eine form- und/oder kraft- und/oder reibschlüssige Verbindung zwischen dem ersten Behälterteil 10 und dem zweiten Behälterteil 20 erzeugen. Die Stabilisierungselemente 501 des unteren Behälterteils 10 können ausserdem so ausgebildet sein, dass sie mit einem identisch ausgebildeten Stabilisierungselement eines benachbarten zweiten Verpackungsbehälters verbindbar sind. Dies ermöglicht es, aus zwei identischen Verpackungsbehältern einen Behälter mit doppelter Kapazität bereitzustellen. Beispielsweise können zwei Behälter zur Aufnahme von sechs Verpackungsgegenständen zu einem Behälter zur Aufnahme von zwölf Gegenständen zusammengesetzt werden. Damit können kleinere Verpackungsbehälter auch auf Verpackungsstrassen eingesetzt werden, welche für grössere Füllmengen ausgelegt sind.

Figur 1 zeigt zudem ein Scharnier oder Verbindungsteil 40, welches zwei Behälterteile 10,20 beweglich miteinander verbindet. Dieses Scharnier 40 wird durch einen Kunststoff gebildet und ist aus dünnwandigem Material, welches sich wenigstens abschnittsweise entlang der zu verbindenden Aussenränder der Behälterteile 10,20 erstreckt. Besonders bevorzugt wird das Verbindungsteil 40 beim Herstellungsverfahren des Verpackungsbehälters 1 im Spritzgiessen gebildet. Dabei wird ein Vorformling des Verpackungsbehälters durch Spritzgiessen hergestellt. Ein Bereich der Kavität der Spritzgussform dient zum Erzeugen des Behälterteils 10 und zwei Bereiche dienen zum Erzeugen der Behälterteile 20. Das Kunststoffmaterial fliesst in den Bereichen in Richtung einer Anformstelle im Bereich des Verbindungsteils 40, wo sich das Material aus den verschiedenen Bereichen der Form trifft und vereinigt. Dadurch wird das Scharnier gebildet. Für die Behälterteile 10 und 20 können daher unterschiedliche Materialien oder Materialien mit unterschiedlichen Eigenschaften verwendet werden.

Figur 2 illustriert als Detail der Figur 1 in einer perspektivischen abgebrochenen Darstellung einen Schliessmechanismus 3 des Behälters 1, mit einem Deckelteil 20 in einer geschlossenen und verriegelten Position.

Das mit Bezugszeichen 300 auch als Riegel bezeichnete erste Entriegelungselement ist mindestens stellenweise um eine funktionale Achse oder ein funktionales Gelenk G1 schwenkbar gelagert.

Das Gelenk G1 wird vorliegend durch dünnschichtiges Material, bspw. einen Kunststoff, gebildet, welches den als Streifen ausgebildeten Riegel 300 an zwei Berührungsorten mit dem rahmenartigen Teil 314 verbindet. Das dünnschichtige Material wirkt wie ein flexibles Band. Das Gelenk G1 wird im Spritzgiessverfahren einstückig mit dem rahmenartigen Teil 314 hergestellt.

Der vorliegend im Detail aus Figur 1 dargestellte Schliessmechanismus 3 zeigt eine Taste 303, welcher mit zwei Riegeln 300 symmetrisch gegenüberliegend verbunden ist. In der Figur 2 ist hinten liegend ein abgebrochen dargestellter, als Deckel ausgebildeter Behälterteil 20 mit einer Eingriffnut, -nocken oder -rippe 201 ersichtlich. Die Eingriffrippe 201 dient dem Benutzer, den Deckel anzuheben, wenn der Schliessmechanismus 3 entriegelt ist.

In entriegeltem Zustand wird der Deckel 20, bzw. die Deckelhälfte durch an dieser angeformte und in eine Ausnehmung 315 eingreifende Nocken 305 durch Formschluss gehalten. Die Ausnehmung 315 im Rahmen 314 eines der Behälterteile 10,20 ist derart geformt, dass diese zwei Nocken 305 einer jeden Deckelhälfte aufnimmt. Zudem wirken Nocken und Ausnehmung derart zusammen, dass den Halbdeckeln genügend Halt in geschlossenem Zustand nach erstmaligem Öffnen gegeben wird, so dass kein Deckel sich selbständig öffnet.

Der dargestellte erfindungsgemässe Behälter 1 mit zwei Schliessmechanismen ist als Eierschachtel zur Aufnahme von sechs Eiern ausgebildet. Selbstverständlich ist der Behälter auch für eine grössere Anzahl Eier herstellbar, wobei mindestens ein Schliessmechanismus vorhanden ist. Der Behälter kann außerhalb des Rahmens der Ansprüche anstatt als Eierschachtel auch für andere Lebensmittel, pharmazeutische Produkte und dergleichen mehr, hergestellt werden.

Figur 2 illustriert zudem die funktionalen Gelenke G1, G2 und G3. Gelenk G3 verbindet gelenkig die hier als Scheibe realisierte Taste 303, wobei Gelenk G3 aus dünnwandigem Material ausgebildet und vorzugsweise an einem Abschnitt des Scheibenrands der Taste, im Wesentlichen geradlinig, angeordnet ist.

Das Gelenk G2, ebenfalls aus dünnwandigem Material, verbindet Steg 301 und Riegel 300. Der Riegel seinerseits ist über ein funktionales Gelenk G3 an einem Behälterteil 10,20 beweglich angeordnet. Die Taste 303 kann ausserdem optional mittels weiteren Gelenken (nicht separat bezeichnet) im Rahmen 314 auf dessen Innenseite verbunden sein.

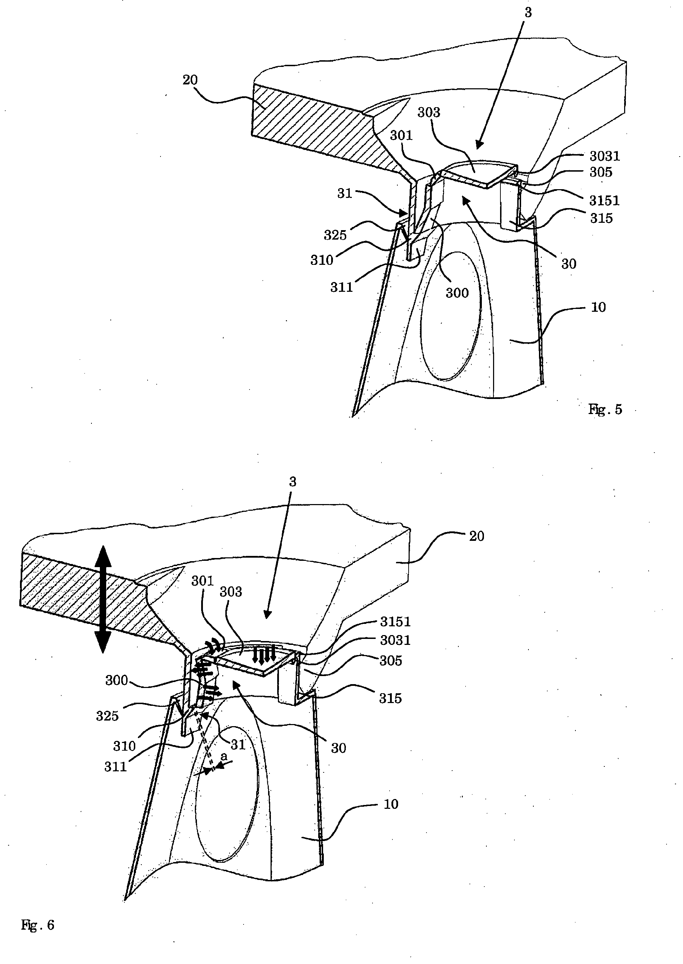

Figur 3 illustriert perspektivisch und abgebrochen dargestellt ein teilweise geschnittenes Deckelteil 20 in einer nicht verschlossenen und nicht verriegelten Zwischenposition. Der Schliessmechanismus 3 weist Einrastmittel 3031,3151 auf, welche derart angeformt sind, dass sie in Entriegelungsposition (Fig. 6) ineinander eingreifen und das Entriegelungsteil 30 fixieren. Im dargestellten Zustand sind die als korrespondierende Haken ausgebildete Einrastmittel 3031,3151 nicht eingerastet.

Der zur Führung und zum Halten des Deckels bzw. Deckelhälfte ausgebildete Nocken 305 setzt in Umfangsrichtung an der Ausnehmung 315 an. Ein mit Bezugszeichen 310 bezeichnetes Verriegelungselement oder Rastmittel des Verriegelungsteils 31 ist vom freien Ende des Riegels 300 beabstandet und greift an den Riegel nicht an. Der als Nase 311 des Verriegelungsteils 31 bezeichnete Vorsprung unterstützt den Schliessvorgang des Deckels 20. Mittels einer Lippe 325, welche an dem Behälterteil 10 angeformt ist, wird die Nase 311 ebenfalls geführt. Die Nase 311 ist elastisch deformierbar und nimmt den Druck des entlang gleitenden Verriegelungsteils 31 teilweise auf. Taste 303, Steg 301 und Riegel 300 sind in einer hier als ursprünglich bezeichneten ersten Position stabil. Diese Position wird dem Entriegelungsteil 30 bei der Herstellung des Behälters aufgezwungen.

Figur 4 illustriert perspektivisch und abgebrochen dargestellt ein teilweise geschnittenes Deckelteil 20 in einer nicht verschlossenen und nicht verriegelten weiteren Zwischenposition. Diese Position des Entriegelungsteils 30 ist jene bei der Herstellung des Behälters erzwungenen stabilen, ersten Position.

Der Deckel 20 wurde etwas weiter gegen das als Boden ausgebildete Behälterteil 10 gedrückt. Die schmale Lippe 311 wurde durch die Nase 325 des Verriegelungsteils 31 elastisch deformiert. Das als Haken ausgebildete Verriegelungselement 310 des Verriegelungsteils 31 ist dem freien Ende des Riegels 300 näher gerückt.

Der zur Führung und Stabilisierung des Deckels 20 ausgebildete Nocken 305 hat in die Ausnehmung 315 Eingriff genommen. Das bzw. jedes Verriegelungsteil 31 des Deckels 20 wird während des Schliessvorgangs ungefähr konzentrisch um das Entriegelungsteil 30 geführt.

Figur 5 illustriert perspektivisch und abgebrochen dargestellt den Schliessmechanismus 30 des Behälters 1 mit dem als Mehrfachgelenk ausgebildeten Entriegelungsteil 30 sowie das Verriegelungsteil 31, wobei das Verriegelungsteil in dargestellter Verriegelungsposition am Entriegelungsteil 30 korrespondierend angreift und eingerastet ist. Das Entriegelungsteil 30 ist nach wie vor in der ursprünglichen, stabilen ersten Position.

Der Haken bzw. das Verriegelungselement 310, welches als Rastmittel wirkend am laschenförmig ausgebildeten Verriegelungsteil 31 angeformt ist, greift am freien Ende des Riegels 300 an. Der Riegel 300 verriegelt selbständig das Verriegelungselement 310. Die Lippe 325 wirkt mit gewissem Druck gegen das Verriegelungsteil 31. Eine Ausführungsform ist jedoch auch ohne Lippe 325 realisierbar. Das Verriegelungselement 310 bedarf dazu einer gewissen Vorspannung, welche hin zum Riegel wirkt.

Der Führungsnocken 305 greift in die Ausnehmung 315 nahezu vollständig ein. Der Nocken 305 liegt stellenweise auf einem Abschnitt eines Behälterteils 10 auf. Der Deckel 20 ist dadurch stabilisiert gehalten. Die Einrastmittel 3031,3151 sind zueinander beabstandet und nicht eingerastet.

Figur 6 illustriert perspektivisch und abgebrochen dargestellt das Entriegelungsteil 30, welches nach dessen Betätigung durch Krafteinwirkung dauernd in einer dargestellten Entriegelungsposition verbleibt und das Verriegelungsteil 31 freigibt. Die Krafteinwirkung und Folgebewegungen sind mit entsprechenden Hilfspfeilen veranschaulicht. Die Einrastmittel 3031,3151 sind eingerastet. Die einmal betätigte und verrastete Taste 303 verbleibt in einer Position, welche hier als zweite stabile Position bzw. "Entriegelungsposition" bezeichnet ist. Der Abstand a zwischen dem Riegel 300 und dem Haken 310 ist grösser als Null und erlaubt in der gezeigten Entriegelungsposition, den Deckel 20 beliebig oft zu öffnen und zu schliessen. Das freie Ende des Riegels 300 wird derart geschwenkt, dass der Haken 310 des Verriegelungsteils 31 besagtes freies Ende nicht mehr berührt. Der nach wie vor wieder verschliessbare Behälter ist entsichert. Das Garantiesiegel ist aufgebrochen. Aufgrund der in Umfangsrichtung formschlüssigen und in axialer (d.h. vertikaler) Richtung reibschlüssigen Verbindung zwischen dem Nocken 305 und der Ausnehmung 315 lässt sich der Behälter aber erneut geschlossen halten.

Die Taste 303 kann in einer anderen Ausführungsform auch dadurch fixiert werden, indem die Länge des oder jedes Steg 301 derart gewählt ist, dass beim Durchdrücken oder Betätigen der Taste 303 jeder Steg ungefähr um einen stumpfen Winkel geschwenkt oder gekippt wird, so dass der oder jeder Steg zwischen Scheibenrand der Taste und oberem Ende des entsprechenden Riegels zu liegen kommt. Einrastmittel 3031,3151 sind diesfalls optional.

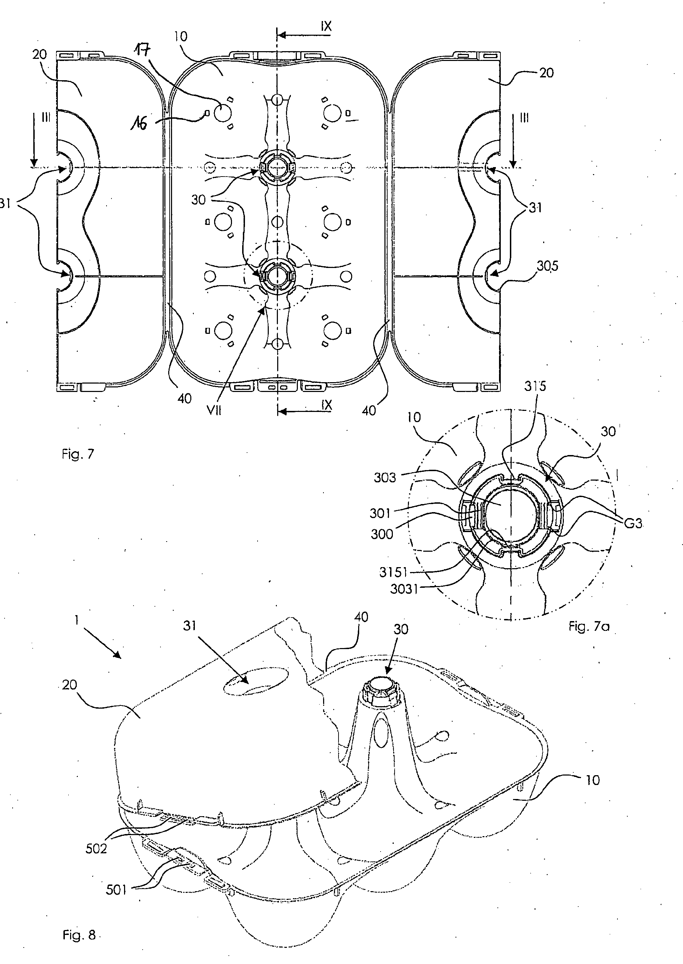

Figur 7 illustriert den Behälter 1 in einem offenen Zustand in einer Aufsicht mit der Schnittlinie III-III. Das Bezugszeichen 30 zeigt Entriegelungsteile, das Bezugszeichen 31 entsprechende Verriegelungsteile. In dieser Figur ist ersichtlich, dass zwei Deckelhälften 20 vorhanden sind, wobei an jeder Hälfte entsprechende Verriegelungsteile angeformt sind. Der als Boden ausgebildete Behälterteil 10 weist zwei säulenartige Teile auf, auf welchen die Entriegelungsteile angeordnet sind. Bezugszeichen VIII verweist auf eine Detailansicht in Figur 7a. Je nach Grösse des Behälters und der Anzahl aufzunehmenden Gegenstände ist es denkbar, am als Boden ausgebildeten Behälterteil 10 einen solchen säulenartigen Teil mit Entriegelungsteilen, zwei säulenartige Teile (wie in Figur 7 gezeigt) oder mehr als zwei solche Teile vorzusehen. Entsprechend sind an den Deckelhälften 20 ein, zwei oder mehr Verriegelungsteile 31 vorzusehen. Vorliegend wird unter dem Begriff Schliessmechanismus mit Entriegelungsteil und Verriegelungsteil jeder Mechanismus verstanden, der wenigstens ein Entriegelungsteil und ein korrespondierendes Verriegelungsteil umfasst. Dabei können mehrere Entriegelungsteile und Verriegelungsteile zusammen als Gruppe angeordnet sein (beispielsweise zwei Entriegelungsteile auf einem säulenartigen Teil) und es können mehrere solcher Gruppen vorgesehen sein (beispielsweise zwei Gruppen auf säulenartigen Teilen wie in Figur 7 gezeigt). In Figur 7 sind ausserdem Federelemente 16 gezeigt, welche zum federnden Halten der Verpackungsgüter (Eier) dienen. Die Federelemente 16 sind erfindungsgemäß als vertikal vom Boden des Behälterteils 10 vorstehende Stege ausgebildet. Diese Stege werden im Spritzgussverfahren eines Vorformlings hergestellt. Ähnliche Stege können auch in den als Deckel dienenden Behälterteilen 20 (in Figur 7 nicht ausdrücklich gezeigt) vorgesehen sein. Die Federelemente 16 sind auf einem Kreis um jede Aufnahmeposition 17 für ein Verpackungsgut angeordnet.

Figur 7a illustriert in einem Detail aus Figur 7 eine Aufsicht auf ein Entriegelungsteil 30 mit einer Taste 303, an welcher zwei Riegel 300 mittels je einem Steg 301 verbunden sind. Jeder Riegel ist am funktionalen Gelenk G3 mit dem Behälterteil 10 verbunden. Die Bezugszeichen 3031,3115 bezeichnen die hier übereinander dargestellten Rastmittel zum Fixieren der Taste in der zweiten stabilen Position, der Entriegelungsposition.

Figur 8 illustriert den Behälter 1 in einer anderen Ausführung, bei welcher das als Deckel ausgeführte eine Behälterteil 20 einstückig ist. Der Deckel ist mit einem als Boden ausgebildeten Behälterteil 10 verbunden, wobei die Verbindung als Scharnier ausgebildet ist. Der Deckel ist abgebrochen dargestellt, so dass das Entriegelungsteil 30 sowie das funktionale Scharnier 40, welches die beiden Behälterteile 10,20 verbindet, ersichtlich ist.

Eine weitere Verwendungsart ist jene, bei der Behälterteile 10,20 von einander getrennt, also gerade nicht miteinander gelenkig verbunden sind, bspw. indem die Behälterteile als einstückige Hälften ausgebildet sind. Entriegelungsteil 30 und Verriegelungsteil 31 wirken auch diesfalls geeignet zusammen.

Ist der Behälter produziert und die Ware abgefüllt, so wird zum vorübergehenden Verschliessen und Verriegeln sichergestellt, dass das Entriegelungsteil 30 sich in Verriegelungsposition (Fig. 5) befindet. Danach werden die beiden Behälterteile 10,20 in eine Zwischenposition (Fig. 4) gebracht, wobei ein Abschnitt 300 des Entriegelungsteils 30 beim Angreifen des Verriegelungsteils 31 verschwenkt wird, so dass das Verriegelungsteil 31 selbsttätig in die Verriegelungsposition (Fig. 5) geht. Diese Verfahrensschritte können manuell und/oder maschinell erfolgen.

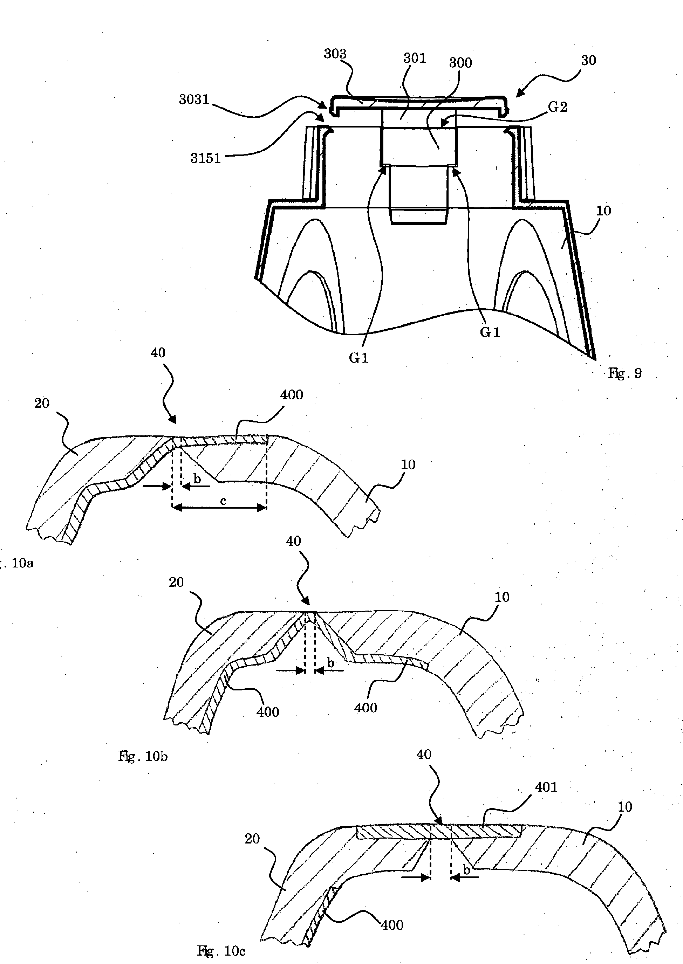

Figur 9 illustriert eine vereinfachte und abgebrochene Darstellung des Entriegelungsteils entlang der in Figur 7 angedeuteten Schnittlinie IX-IX. Dabei ist mit Bezugszeichen 10 das erste Behälterteil ("Boden") bezeichnet, an welchem das Entriegelungsteil 30 angeformt ist. An der Taste 303, welche mittels Steg 301 gelenkig am Riegel 300 angeordnet ist, sind zwei als Haken ausgebildete Rastmittel 3031 angeformt. Diese greifen in der in Figur 6 dargestellten Entriegelungsposition in die jeweiligen Rastmittel 3151 ein. Mit G1 und G3 (siehe Figur 2) sind Gelenke bezeichnet, welche die nötige Beweglichkeit entlang einer definierbaren Bewegungsbahn beim Entriegeln ermöglichen. Das Gelenk G3 ist in dieser Darstellung nicht ersichtlich, bzw. durch die geschnitten dargestellte Taste 301 verdeckt.

Die Rastmittel können anstelle von Haken auch als Nocken oder dergleichen ausgebildet sein, wobei bspw. ein Nocken in eine korrespondierende Öffnung oder Loch eingreifen kann.

Figuren 10a, 10b und 10c illustrieren in einer schematischen, vereinfachten Detailansicht das Scharnier 40 zwischen den jeweiligen Behälterteilen 10,20 des Behälters 1. Mit Bezugszeichen b ist ein Scharnierbereich dargestellt. Der Scharnierbereich weist je nach Bedarf eine Breite von einigen Zehntel Millimetern bis mehreren Millimetern auf. Die beiden Randbereiche der Behälterteile 10, 20 sind durch das Scharnier 40 beweglich nach einer der Ausführungsformen der Figuren 10a bis 10c verbunden.

Figur 10a zeigt abgebrochen dargestellte Behälterteile 10,12 entlang der Schnittlinie III-III in Figur 7. Der oder jeder zweite Behälterteil 20, hier als Deckel oder Deckelhälfte ausgebildet, weist ein dünnwandiges Material 400 auf, aus welchem das Scharnier gebildet ist. Im Scharnierbereich b ist auf keiner der beiden Aussenseiten oder Oberflächen des Materials 400 ein Behälterteil 10,20 vorhanden, so dass es frei steht und ein flexibles Scharnier bildet.

Bei der Herstellung des Behälters wird an das als Folie ausgebildete Material 400 vorerst der Behälterteil 20 angeformt und überlappt das Material 400 mit einer Überlappung c. Der erste Behälterteil 10, hier der Boden, wird anschliessend im Spritzgiessverfahren an das dünnwandige Material 400 angeformt. Das Material 400 wird auf der in Figur 10a linken Seite weiter in das Innere des Behälterteils 20 geführt. Durch diese Verlängerung ist es möglich, auf dem Material 400 Bedruckungen vorzunehmen, sodass das Material 400 gleichzeitig als Filmscharnier 40 im Bereich b und als bedrucktes oder bedruckbares Label im in Figur 10a links dargestellten Bereich dient. Wenn das Behälterteil 20 aus transparentem Material gebildet ist, sind Aufdrucke auf dem Material 400 von aussen ersichtlich. Das spätere separate Einlegen eines Labels entfällt dabei.

Figur 10b zeigt eine weitere Möglichkeit der Anformung der Behälterteile 10,12 an das dünnwandige Material 400.

Figur 10c zeigt eine Variante, wobei das Scharnier 40 durch ein zusätzliches dünnwandiges Material 401 gebildet ist und die beiden Behälterteile flexibel verbindet.

Die dünnschichtigen Materialien 400,401 sind vorzugsweise als Kunststofffolien ausgebildet.

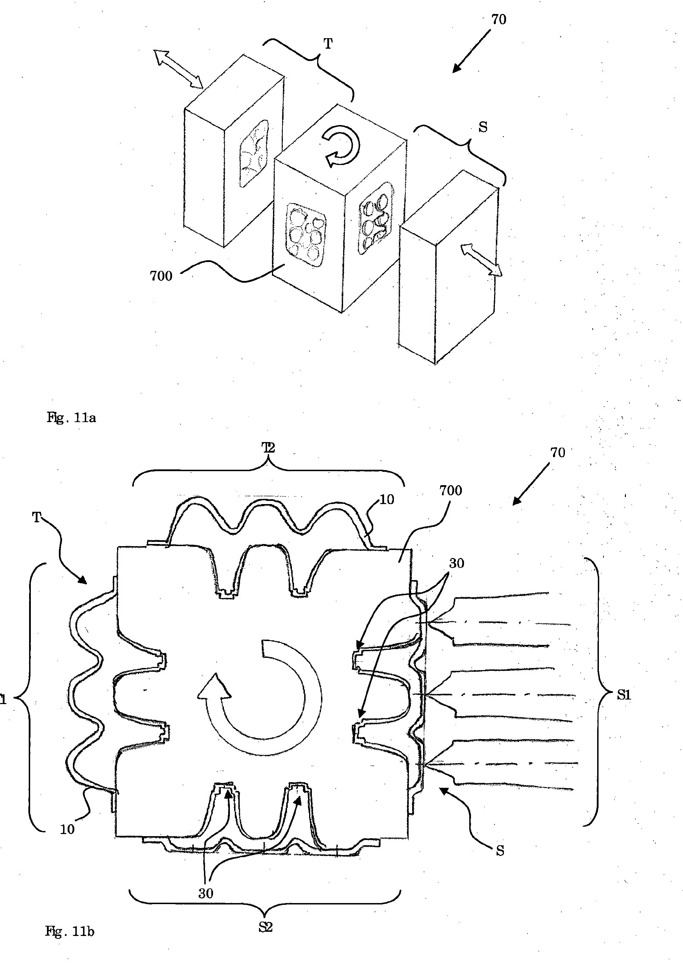

Figur 11a illustriert ein Verfahren sowie eine Vorrichtung zur Herstellung des behälters 1, die nicht Gegenstand der Ansprüche sind. Die Vorrichtung 70 zur Herstellung eines Formteils aus thermoplastisch verformbarem Material, bspw. eines Verpackungsbehälters aus Kunststoff, umfasst eine Spritzgiessvorrichtung S mit einer ersten Form, eine Tiefziehvorrichtüng T mit einer zweiten Form sowie ein dazwischen drehbar gelagertes Wendeteil 700. Das Wendeteil 700 weist zur ersten und zweiten Form entsprechende Formen auf, welche mit besagter ersten und zweiten Form wirkverbindbar sind.

Der Vorteil dieser in einer Aufsicht in Figur 11b illustrierten Vorrichtung 70, welche Spritzgiess- und Tiefziehverfahren kombiniert, besteht darin, dass präzise mechanische Bereiche des Formteils, hier bspw. das Entriegelungsteil 30, mit voluminösen und grossflächigen Bereichen des Formteils, hier bspw. die Kavitäten im Boden 10 des Behälters 1, kombiniert werden können. Ein sich daraus ergebender Vorteil ist die hohe Effizient bei der Herstellung von Formteilen aus Kunststoff, da die Logistik vereinfacht wird und ein Maschinenwechsel im bekannten Sinn entfällt.

In einem ersten Schritt kann also ein Vorformling spritzgegossen werden, wobei danach das Wendeteil, welches im Querschnitt quadratisch oder polygonal ist, schrittweise um die eigene Achse gedreht wird. Das Formteil kann in diesem Schritt hier abkühlen. Im nächsten Schritt kann aus dem gespritzten Vorformling der grossflächige Teil, bspw. der Boden des Behälters, durch Tiefziehen geformt werden. Das Wendeteil dreht sich nach diesem Schritt weiter, wo die Reste aus dem Tiefziehverfahrensschritt abgetrennt bzw. abgeschnitten werden können. Diejenigen Bereiche, welche mechanisch präzis geformt sind (typischerweise die Bereiche welche ineinander eingreifende Elemente wie Entriegelungsteil 30, Verriegelungsteil 31 oder Stabilisierungselemente 501,502 aufweisen) werden dadurch im Spritzgussverfahren hergestellt und nachfolgend nicht mehr verformt. Weniger sensible Bereiche wie die Kavitäten zur Aufnahme des Verpackungsgutes werden im Vorformling im gleichen Herstellverfahren erzeugt, aber in einem weiteren Schritt verformt, insbesondere durch Tiefziehen oder Blasformen.
Die erfindungsgemässe Vorrichtung zur Herstellung von Behältern aus plastifiziertem Material, insbesondere Kunststoff, wird vorzugsweise zur Herstellung von Eierbehältern aus Kunststoff mit einem Schliessmechanismus verwendet. Besonders vorteilhaft dabei ist, dass mittels einer Maschine sowohl mechanisch präzise Funktionsteile, wie besagter Schliessmechanismus, als auch grossflächige Behälterteile - vorliegend der Behälterboden zur Aufnahme der Eier - in wenigen Verfahrensschritten hergestellt sind.

In Verfahrensschritt S1 wird im Spritzgiessverfahren ein Vorformling mit den Entriegelungsteilen 30 in das teilweise am Wendeteil 700 angeordnete, geschlossene Spritzgiesswerkzeug bzw. die Form gespritzt. Anschliessend werden die Werkzeugteile geöffnet und das Wendeteil um eine Vierteldrehung um die eigene Achse in Position oder Verfahrensschritt S2 gedreht. In dieser Position kann das Formteil auskühlen und/oder weiter bearbeitet werden. In Verfahrensschritt S1 wird bereits das nächste Formteil gespritzt.

Aus der Position S2 wird das Wendeteil um eine Vierteldrehung gedreht und in Verfahrensschritt T1 gebracht, wo vorliegend im Tiefziehverfahren die Kavitäten des als Boden ausgebildeten Behälterteils 10 gebildet werden. Die Werkzeuge werden geöffnet und das Wendeteil in die Position T2 gedreht, wo das Formteil auskühlen kann. Zudem können weitere Bearbeitungsschritte vorgenommen werden, wie etwa das Abtrennen von überstehendem Material.

Je nach Bedarf kann ein Formteil auch vorerst im Tiefziehverfahren vorfabriziert und danach entsprechende Funktionsteile, bspw. ein Entriegelungsteil 30 oder ein Verriegelungsteil 31, im Spritzgiessverfahren angeformt werden.

Die Zwischenschritte S2 und T2 können nach Bedarf entfallen. Diesfalls wiest das Wendeteil ein Spritzgiesswerkzeug und ein Tiefziehwerkzeug auf, welche 180 zueinander versetzt angeordnet sind. Die Entnahme des gefertigten Formteils erfolgt vorzugsweise nach dem Öffnen der entsprechenden Werkzeuge bei der Position S1 oder T1 oder in einer Zwischenposition, welche durch Drehung des Wendeteils 700 erreicht wird.

## Patentansprüche

1. Verschliessbarer Eierverpackungsbehälter, hergestellt aus Kunststoff im Spritzgiessverfahren, mit mehreren Behälterteilen, wobei ein erster Behälterteil (10) einen Boden und ein zweiter Behälterteil (20) einen Deckel des Verpackungsbehälters bilden
wobei wenigstens in einem der Behälterteile (10, 20) im Bereich wenigstens einer Aufnahmeposition (17) Federelemente (16) zum Halten der zu verpackenden Eier angeordnet sind, **dadurch gekennzeichnet, dass** die Federelemente (16) als von einem Boden vom Behälterteil (10,20) vorstehende federnde Laschen ausgebildet sind.

2. Eierverpackungsbehälter (1) gemäss Anspruch 1, **dadurch gekennzeichnet, dass** im ersten und im zweiten Behälterteil (10,20) Federelemente (16) angeordnet sind.

3. Eierverpackungsbehälter (1) nach Anspruch 2, **dadurch gekennzeichnet, dass** durch die Federelemente (16) Eier unterschiedlicher Grösse unabhängig von ihrer Grösse stabil im Behälter haltbar sind.

4. Eierverpackungsbehälter (1) gemäss einem der Ansprüche 1 bis 3, dadurch gekenntzeichnet, dass die Federelemente (16) in ungefähr senkrechter Richtung, insbesondere vertikal, vom Boden des Behälterteiles (10, 20) vorstehen.

5. Eierverpackungsbehälter nach einem der Ansprüche 1 bis 4, **dadurch gekennzeichnet, dass** die Federelemente (16) entlang eines Kreises angeordnet sind.

6. Eierverpackungsbehälter, nach Anspruch 5, **dadurch gekennzeichnet, dass** drei bis fünf Federelemente (16) entlang des Kreises angeordnet sind.

7. Eierverpackungsbehälter (1) gemäss einem der vorgenannten Ansprüche, **dadurch gekennzeichnet, dass** die Behälterteile (10,20) voneinander getrennt oder miteinander gelenkig verbunden sind.

8. Eierverpackungsbehälter (1) gemäss einem der vorgenannten Ansprüche, **dadurch gekennzeichnet, dass** zur Stabilisierung des Verpackungsbehälters (1) beim Schliessen desselben an den Behälterteilen (10,20) in einander greifende Stabilisierungsmittel (501, 502) vorhanden sind, welche an einem Aussenrand (15,25) eines jeden Behälterteils (10, 20) angeordnet sind.

9. Eierverpackungsbehälter (1) gemäss einem der vorgenannten Ansprüche, **dadurch gekennzeichnet, dass** ein erster Behälterteil (10) und ein zweiter Behälterteil (20) direkt oder indirekt in einer Anformstelle (40) aneinander angeformt sind, insbesondere im Spritzgiessverfahren.

10. Eierverpackungsbehälter (1) nach Anspruch 9, **dadurch gekennzeichnet, dass** die Anformstelle einen Scharnierbereich (b) zum gelenkigen Verbinden der Behälterteile (10,20) bildet.

11. Eierverpackungsbehälter (1) nach einem der Ansprüche 1 bis 10, **dadurch gekennzeichnet, dass** der erste Behälterteil (10) und der zweite Behälterteil (20) aus Material mit unterschiedlichen Eigenschaften geformt ist, insbesondere aus gleichem Material mit unterschiedlichen optischen Eigenschaften oder aus unterschiedlichen Materialien.

12. Eierverpackungsbehälter (1) gemäss einem der Ansprüche 1 bis 11, **dadurch gekennzeichnet, dass** zum gelenkigen Verbinden zweier Behälterteile (10,20) ein Scharnierbereich (b) aus einem zusätzlichen Verbindungsstreifen vorgesehen ist und dass insbesondere die Behälterteile an ein dünnwandiges Material (40) angeformt sind und der Behälter einen Scharnierbereich (b) aufweist, welcher frei von Behälterteilen ist.

13. Eierverpackungsbehälter (1) gemäss Anspruch 12, wobei der Verbindungsstreifen als Folie ausgebildet ist, welche sich bevorzugt derart über den Scharnierbereich (b) erstreckt, dass ein Teil (400) des Verbindungsstreifens bedruckbar ist oder dass der Teil (400) des Verbindungsstreifens teilweise bedruckt ist.

## Claims

1. Closable egg-packaging container, produced from plastic by an injection-moulding process, comprising a plurality of container parts, wherein a first container part (10) forms a base of the packaging container and a second container part (20) forms a lid of the packaging container, wherein spring elements (16) for holding the eggs to be packaged are arranged at least in one of the container parts (10, 20) in the region of at least one receiving position (17), **characterized in that** the spring elements (16) are designed as resilient tabs which protrude from a base of the container part (10, 20).

2. Egg-packaging container (1) according to Claim 1, **characterized in that** spring elements (16) are arranged in the first and second container part (10, 20).

3. Egg-packaging container (1) according to Claim 2, **characterized in that** the spring elements (16) make it possible for different-sized eggs to be held in a stable manner in the container irrespective of their size.

4. Egg-packaging container (1) according to one of Claims 1 to 3, **characterized in that** the spring elements (16) protrude in an approximately perpendicular direction, in particular vertically, from the base of the container part (10, 20).

5. Egg-packaging container according to one of Claims 1 to 4, **characterized in that** the spring elements (16) are arranged along a circle.

6. Egg-packaging container according to Claim 5, **characterized in that** three to five spring elements (16) are arranged along the circle.

7. Egg-packaging container (1) according to one of the preceding claims, **characterized in that** the container parts (10, 20) are separated from one another or articulatedly connected to one another.

8. Egg-packaging container (1) according to one of the preceding claims, **characterized in that**, in order to stabilize the packaging container (1) when closing the latter, inter-engaging stabilizing means (501, 502) are present on the container parts (10, 20) and are arranged at an outer edge (15, 25) of each container part (10, 20).

9. Egg-packaging container (1) according to one of the preceding claims, **characterized in that** a first container part (10) and a second container part (20) are moulded directly or indirectly on one another at a moulding-on site (40), in particular by an injection-moulding process.

10. Egg-packaging container (1) according to Claim 9, **characterized in that** the moulding-on site forms a hinge region (b) for articulatedly connecting the container parts (10, 20).

11. Egg-packaging container (1) according to one of Claims 1 to 10, **characterized in that** the first container part (10) and the second container part (20) are formed from material having different properties, in particular from the same material with different visual properties or from different materials.

12. Egg-packaging container (1) according to one of Claims 1 to 11, **characterized in that**, in order to articulatedly connect two container parts (10, 20), a hinge region (b) consisting of an additional connecting strip is provided, and **in that**, in particular, the container parts are moulded onto a thin-walled material (40) and the container has a hinge region (b) which is free from container parts.

13. Egg-packaging container (1) according to Claim 12, wherein the connecting strip is designed as a film which preferably extends over the hinge region (b) in such a way that a part (400) of the connecting strip is printable or that the part (400) of the connecting strip is partially printed.

## Revendications

1. Récipient de conditionnement d'oeufs refermable, fabriqué en matière plastique par un procédé de coulée par injection, avec plusieurs parties de récipient, dans lequel une première partie de récipient (10) forme un fond et une deuxième partie de récipient (20) forme un couvercle du récipient de conditionnement, dans lequel des éléments de ressort (16) sont agencés au moins dans une des parties de récipient (10, 20) dans la région d'au moins une position de réception (17) pour maintenir les oeufs à emballer, **caractérisé en ce que** les éléments de ressort (16) sont réalisés sous forme de pattes élastiques saillantes d'un fond de la partie de récipient (10, 20).

2. Récipient de conditionnement d'oeufs (1) selon la revendication 1, **caractérisé en ce que** des éléments de ressort (16) sont agencés dans la première et dans la deuxième parties de récipient (10, 20).

3. Récipient de conditionnement d'oeufs (1) selon la revendication 2, **caractérisé en ce que** des oeufs de taille différente peuvent être maintenus de façon stable dans le récipient, indépendamment de leur taille, par les éléments de ressort (16).

4. Récipient de conditionnement d'oeufs (1) selon l'une quelconque des revendications 1 à 3, **caractérisé en ce que** les éléments de ressort (16) sont saillants en direction sensiblement perpendiculaire, en particulier verticale, à partir du fond de la partie de récipient (10, 20).

5. Récipient de conditionnement d'oeufs selon l'une quelconque des revendications 1 à 4, **caractérisé en ce que** les éléments de ressort (16) sont agencés le long d'un cercle.

6. Récipient de conditionnement d'oeufs selon la revendication 5, **caractérisé en ce que** trois à cinq éléments de ressort (16) sont agencés le long du cercle.

7. Récipient de conditionnement d'oeufs (1) selon l'une quelconque des revendications précédentes, **caractérisé en ce que** les parties de récipient (10, 20) sont séparées l'une de l'autre ou sont reliées l'une à l'autre de façon articulée.

8. Récipient de conditionnement d'oeufs (1) selon l'une quelconque des revendications précédentes, **caractérisé en ce que**, pour la stabilisation du récipient de conditionnement (1) lors de sa fermeture, il se trouve sur les parties de récipient (10, 20) des moyens de stabilisation (501, 502) s'engageant l'un dans l'autre, qui sont agencés sur un bord extérieur (15, 25) de chaque partie de récipient (10, 20).

9. Récipient de conditionnement d'oeufs (1) selon l'une quelconque des revendications précédentes, **caractérisé en ce qu'**une première partie de récipient (10) et une deuxième partie de récipient (20) sont formées l'une avec l'autre directement ou indirectement dans un poste de formage (40), en particulier par un procédé de coulée par injection.

10. Récipient de conditionnement d'oeufs (1) selon la revendication 9, **caractérisé en ce que** le poste de formage forme une zone de charnière (b) pour la liaison articulée des parties de récipient (10, 20).

11. Récipient de conditionnement d'oeufs (1) selon l'une quelconque des revendications 1 à 10, **caractérisé en ce que** la première partie de récipient (10) et la deuxième partie de récipient (20) est formée en un matériau ayant des propriétés différentes, en particulier en un même matériau avec des propriétés optiques différentes ou en des matériaux différents.

12. Récipient de conditionnement d'oeufs (1) selon l'une quelconque des revendications 1 à 11, **caractérisé en ce qu'**il est prévu une zone de charnière (b) en un ruban de liaison supplémentaire pour la liaison articulée de deux parties de récipient (10, 20) et **en ce que** les parties de récipient sont formées en particulier dans un matériau de faible épaisseur (40) et le récipient présente une zone de charnière (b) qui est libre de parties de récipient.

13. Récipient de conditionnement d'oeufs (1) selon la revendication 12, **caractérisé en ce que** le ruban de liaison est constitué par une feuille, qui s'étend sur la zone de charnière (b), de préférence de telle manière qu'une partie (400) du ruban de liaison puisse être imprimée ou que la partie (400) du ruban de liaison soit partiellement imprimée.
